# EUROPÄISCHE PATENTSCHRIFT

(11) **EP 1 768 815 B1**
(45) Veröffentlichungstag und Bekanntmachung des Hinweises auf die Patenterteilung: **23.06.2010**
(21) Anmeldenummer: 05760692.3
(22) Anmeldetag: 18.07.2005
(51) Int. Cl.: B23K 20/12, B23K 35/02, F16B 37/06

(54) **BEFESTIGUNGSELEMENT ZUR REIBSCHWEISSVERBINDUNG MIT EINEM FLÄCHIGEN BAUTEIL**
FASTENING ELEMENT FOR BEING FRICTION WELDED TO A FLAT COMPONENT
ELEMENT DE FIXATION DESTINE A ETRE SOUDE PAR FRICTION A UN ELEMENT CONSTITUTIF PLAT

(30) Priorität: 16.07.2004 DE 102004034497; 09.09.2004 DE 202004014071 U
(43) Veröffentlichungstag der Anmeldung: 04.04.2007
(73) Patentinhaber: EJOT GmbH & Co. KG, 57334 Bad Laasphe (DE)
(72) Erfinder: MAUER, Dieter, 35457 Lollar (DE); CHRIST, Eberhard, 99897 Tambach-Dietharz (DE)
(74) Vertreter: Bardehle, Heinz
(86) Internationale Anmeldenummer: PCT/EP2005/007811
(87) Internationale Veröffentlichungsnummer: WO 2006/008122

(56) Entgegenhaltungen:
- EP-A- 0 478 166
- EP-A- 1 060 823
- DE-A1- 19 642 331
- DE-C1- 19 637 935
- US-A- 5 785 805
- US-B1- 6 238 121

## Beschreibung

Die Erfindung bezieht sich auf ein Befesbgungselement mit einer einen konzentrischen Ringwulst aufweisenden Stirnseite zur Reibschweißuerbindung mit einem flächigen Bauteil durch auf das Befestigungselement wirkende Rotationskraft und Presskraft gegen das Bauteil, wobei der Ringwulst im Bereich seiner größten Höhe eine konzentrische Aufnahme des Abtriebs aufweist und Bestandteile eines Flansches ist, der mit seiner dem Ringwulst abgewandten Seite eine Gegenfläche für die Presskraft gegen das Bauteil bildet

Ein derartiges Befestigungselement ist in der DE 196 42 331 dargestellt und beschrieben. Das Befesügungselement besteht aus einem Bolzen, der in einen Flansch zur Aufnahme einer Druckkraft übergeht und der mit einem Ringwulst zur Ausbildung einer Reibschweißuerbindung versehen ist, wozu das Befestigungselement über den Flansch einer Rotations- und einer Presskraft ausgesetzt wird. Der dabei entstehende Abrieb bzw. auch von außen her möglicherweise eindringender Schmutz wird dabei nicht aufgefangen und kann daher sich gefährlich störend auf die Ausbildung auf die eigentliche Reibschweißverbindung auswirken.

Der Erfindung liegt die Aufgabe zugrunde, dass eingangs genannte Befestigungselement so zu gestalten, dass es bei gleichmäßiger Führung die Tendenz besitzt, sich unbeeinflusst von einem entstehenden Abrieb bei Rotation automatisch zu zentrieren und den Abrieb aufzufangen, wodurch dieser von der eigentlichen Reibschweißstelle ferngehalten wird. Außerdem soll das Befestigungselement grundsätzlich so gestaltet sein, dass es sich zur Einbindung der Rotationskraft in günstiger Weise einspannen lässt

Erfindungsgemäß geschieht dies dadurch, dass der Flansch sowohl den Ringwulst als auch außerhalb des Ringwulstes eine konzentrische Rille mit einer äußeren Wandung zur Abweisung und Aufnahme von beim Reibschweißen entstehenden Abriebs aufweist, wobei der Flansch mit seiner Außenfläche einen Mitnehmer für die Rotationskraft bildet.

Aufgrund dieser Gestaltung des Ringvorsprungs mit einer konzentrischen Berührungslinie ergibt sich bei der Rotation und dem Andrücken des Befestigungselementes an ein flächiges Bauteil sofort eine der Berührungslinie folgende Ein- drucklinie in dem Bauteil, die sich mit fortschreitendem Reibschweißvorgang vertieft und damit automatisch zur Selbstzentrierung des Befestigungselementes bei dem Reibschweißvorgang führt. Dabei sorgt die den Ringwulst umgebende konzentrische Rille mit ihrer äußeren Wandung und der zentralen Vertiefung für die Abweisung bzw. Aufnahme von beim Reibschweißen entstehenden Abriebs, insbesondere Schmelzreste und Schmutzpartikel, die damit automatisch von dem eigentlichen Bereich des Reibschweißens weggeführt werden und damit den Reibschweißvorgang nicht stören können. Durch die Integration des Ringwulstes in den Flansch kann dieser vorteilhaft eine Mehrzahl von Aufgaben übernehmen, nämlich zusätzlich die Übertragung der Rotations- und der Presskraft, was eine entsprechend konzentrierte Gestaltung des erfindungsgemäßen Befestigungselementes ermöglicht. Der Flansch ist in der Lage, die notwendigen Andruckkräfte aufzunehmen, die beim Reibschweißen wirken müssen und von dem rotierenden Befestigungselement in die Reibschweißzone an den Bauteil übertragen werden. Der Flansch wird gleichzeitig als Mitnehmer ausgenutzt, insbesondere wenn er als Sechskant ausgebildet ist, was für das Mitnehmen des Befestigungselements durch ein rotierendes Futter eines entsprechenden Werkzeugs von Vorteil ist. Dabei bildet der Flansch mit seiner dem Ringwulst abgewandten Seite eine Gegenfläche für das Futter einer Reibschweißvorrichtung, das, wie vorstehend dargelegt, eine auf den Flansch ausgeübte Presskraft auf die Schweißstelle überträgt.

Vorteilhaft lässt sich der Ringwulst im Querschnitt ballig ausbilden. Aufgrund dieser Gestaltung ergibt sich bei der Berührung des Ringwulstes mit dem Bauteil eine konzentrische schmale Berührungslinie, die automatisch zu der vorstehend erwähnten Zentrierung des Befestigungselementes beim Reibschweißen entsteht. Die ballige Ausbildung wirkt dabei auch kompensierend bezüglich eines nicht exakt rechtwinklig erfolgenden Aufsetzens des Befestigungselementes auf ein Bauteil.

Es sind aber auch andere Querschnittsgestaltungen des Ringwulstes möglich, z.B. derart, dass der Ringwulst im Querschnitt von einer konvexen, konzentrisch umlaufenden Konusfläche begrenzt ist, die nach außen hin in der Berührungslinie am äußeren Rand des Ringwulstes endet. In diesem Falle wird die konzentrische Berührungslinie so weit wie möglich an den Außenrand des Ringwulstes gelegt, womit der Zentrierungseffekt der Berührungslinie noch intensiviert wird.

Als Ausführungsformen für das Befestigungselement eignen sich z.B. Bolzen und Mutter.

Das als Mutter gestaltete Befestigungselement lässt sich vorteilhaft dadurch als Massekontakt gestalten, dass ihre eine Seite als Schweißseite einen konzentrischen Ringwulst für den Reibschweißvorgang und ihre andere Seite als Kontaktseite für die elektrische Kontaktierung eines elektrischen Leiters derart gestaltet ist, dass die Kontaktseite einen gegenüber dem Mutterkörper konzentrischen Vorsprung aufweist, dessen Stirnseite die Kontaktfläche bildet und dessen runder Außenrand vom Kopf einer vormontierten Schraube überragt und abgedichtet ist.

Für das Anbringen und Reibschweißen der Reibschweißmutter besitzt diese den konzentrischen Ringwulst, der beim Reibschweißen eine konzentrische Berührungslinie gegenüber dem betreffenden Bauteil entstehen lässt, was zu einer Selbstzentrierung bei der Rotation der Reibschweißmutter unter Presskraft führt.

Der die spätere Kontaktstelle bildende konzentrische Vorsprung ist zunächst während der Anbringung der Reibschweißmutter durch Reibschweißen von dem Kopf der vormontierten Schraube abgedeckt, der gleichzeitig aufgrund seines Andrucks gegen den Vorsprung für eine Abdichtung der Kontaktseite sorgt, so dass diese ständig frei von Verschmutzungen bleibt, bis die Reibschweißmutter endgültig angebracht ist, die vormontierte Schraube abgeschraubt und mit ihr ein elektrischer Leiter an der Reibschweißmutter festgeschraubt ist. Die vormontierte Schraube dient dabei also einerseits zur Abdeckung und Sauberhaltung der empfindlichen Kontaktseite der Reibschweißmutter während der Anbringung der Reibschweißmutter und einem späteren Lackierprozess als auch während der Befestigung eines elektrischen Leiters an der Kontaktseite der Reibschweißmutter, so dass die Kontaktseite der Reibschweißmutter stets gegen Verschmutzung und Korrosion geschützt und eine sichere Kontaktgabe gewährleistet ist.

Zweckmäßig gestaltet man den konzentrischen Vorgang so, dass der Durchmesser seines Außenrandes kleiner ist als der kleinste Durchmesser der Unterseite des Schraubenkopfes. In diesem Falle überragt der Schraubenkopf mit Sicherheit den Vorsprung, so dass dessen gesamte Fläche ständig gegen Verschmutzung gesichert ist.

Um eine besonders gute Kontaktgabe bei gleichzeitiger Sicherung der Schraube und Abdichtung des Bereichs der Kontaktstelle zu gewährleisten, gestaltet man die Stirnseite des Vorsprungs zweckmäßig so, dass dieser einen flachkonkaven Konus aufweist, dessen runder Außenrand bei Andrücken des Schraubenkopfes einen linienhaften Kontaktbereich erhöhten Kontaktdrucks bildet. Aufgrund dieser Gestaltung wird ein elektrischer Leiter, insbesondere ein Kabelschuh, besonders fest im Bereich des runden Außenrandes des Vorsprunges gegen diesen gedrückt, was eine sichere Kontaktgabe gewährleistet. Dabei entsteht nämlich ein linienhafter Kontaktbereich, der sich durch einen erhöhten Kontaktdruck auszeichnet. Der flachkonkave Konus als Aufnahme des elektrischen Leiters sorgt weiterhin dafür, dass die hergestellte Verbindung einer Selbsthemmung unterliegt, da der flachkonische Bereich den Leiter gewissermaßen in seinen inneren Bereich hineinzieht und damit eine Hemmung gegen Selbstlösung bietet. Weiterhin ergibt sich dabei der vorteilhafte Effekt, dass durch den besonders hohen Druck am Außenrand des Vorsprungs sich eine besonders starke Abdichtung nach innen hin ausbildet, durch die die Kontaktstelle gegen Eindringen von Feuchtigkeit abgedichtet und somit das Gewinde vor Korrosion besonders geschützt wird.

Im Falle der Ausbildung des Befestigungselementes als Bolzen mit einem Gewindeschaft lässt sich dieser durch einen Übergang zu dem Flansch als Bereich zum Erfassen des Bolzens durch ein Futter ausnutzen, der einen an den Flansch anschließenden koaxialen zylindrischen Hals bildet, der mit gegenüber dem Gewindeschaft größeren Durchmesser in die Gegenfläche übergeht und bei Erfassen durch das Futter eine genaue zentrische Rotation des Bolzens beim Anpressen an das Bauteil ermöglicht und auch hinsichtlich seines Durchmessers problemlos mit geringer Toleranz gefertigt werden kann.

Bei der Ausbildung der Reibschweißverbindung wird auch der Bereich innerhalb des Rings des aufgeschmolzenen Materials erhitzt, was insbesondere bei Vorhandensein von Verunreinigungen oder Beschichtungen zu einem Verdampfen führen kann. Solche Dämpfe werden durch den Berührungskontakt zwischen dem Bauteil und dem Ringwulst eingeschlossen. Um diesen Dämpfen eine Ableitung zu geben, kann man in den Ringwulst ein oder mehrere Radialnuten einbringen, deren Tiefe der Reibschweißverbindung entspricht. Diese Radialnuten sind so schmal, dass sie praktisch keine Beeinträchtigung der Festigkeit der Reibschweißverbindung mit sich bringen, jedoch verhindern, dass innerhalb der Reibschweißverbindung durch irgendwelche Dämpfe ein unerwünschter Überdruck entsteht. Die Radialnuten können darüber hinaus auch die erwünschte Wirkung haben, eine gegebenenfalls auf dem Bauteil vorhandene Beschichtung vor Beginn des eigentlichen Reibschweißvorganges wegzuschaben.

In den Figuren sind Ausführungsbeispiele der Erfindung dargestellt. Es zeigen:
- Figur 1: ein als Bolzen ausgebildetes Befestigungselement mit einem balli- gen Ringwulst in Seitenansicht, teilweise im Schnitt;
- Figur 2: den Bolzen in Draufsicht auf den Ringwulst;
- Figur 3: einen ähnlichen Bolzen mit einer konzentrisch umlaufenden Ko- nusfläche an dem Ringwulst, teilweise im Schnitt;
- Figur 4: ein das Befestigungselement bildender Bolzen, angeschweißt an ein Bauteil;
- Figur 5: ein als Mutter ausgebildetes Befestigungselement;
- Figur 6: die Mutter gemäß Figur 5, angeschweißt an ein Bauteil.
- Figur 7: die Reibschweißmutter verschweißt mit einem Blech und mit vor- montierter Schraube;
- Figur 8: die Reibschweißmutter allein;
- Figur 9: die Reibschweißmutter mit angeschraubtem Kabelschuh;
- Figur 10: ein als Bolzen ausgebildetes Befestigungselement mit einem balli- gen Ringwulst in Seitensicht, teilweise im Schnitt;
- Figur 11: den Bolzen in Draufsicht auf den Ringwulst;
- Figur 12: das Futter mit von diesem aufgenommen und gegen ein Bauteil angedrückten Bolzen;
- Figur 13: einen durch Reibschweißen mit einem beschichteten Bauteil ver- bunden Bolzen;
- Figur 14: ein als Bolzen ausgebildetes Befestigungselement gemäß Figur 1 in Seitensicht mit einer Radialnut;
- Figur 15: ein als Bolzen ausgebildetes Befestigungselement in Draufsicht auf den Ringwulst, der hier mit drei Radialnuten versehen ist.

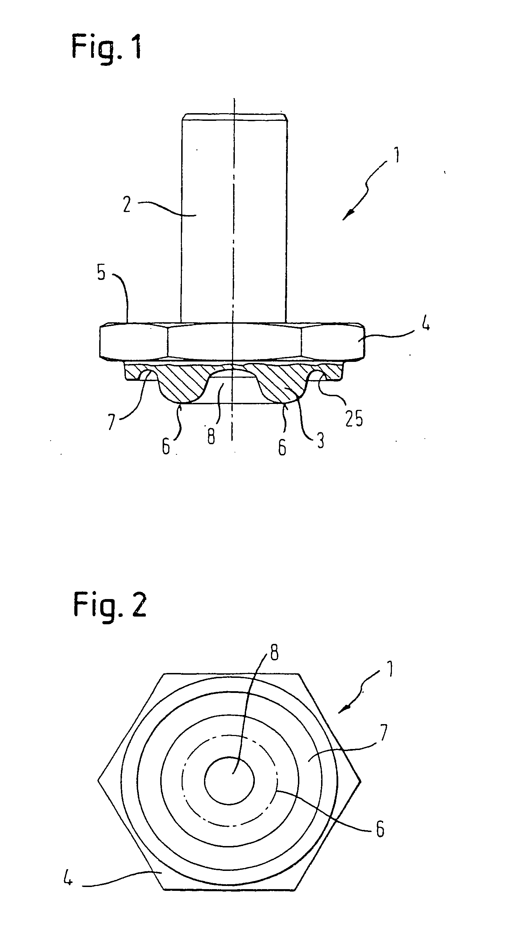

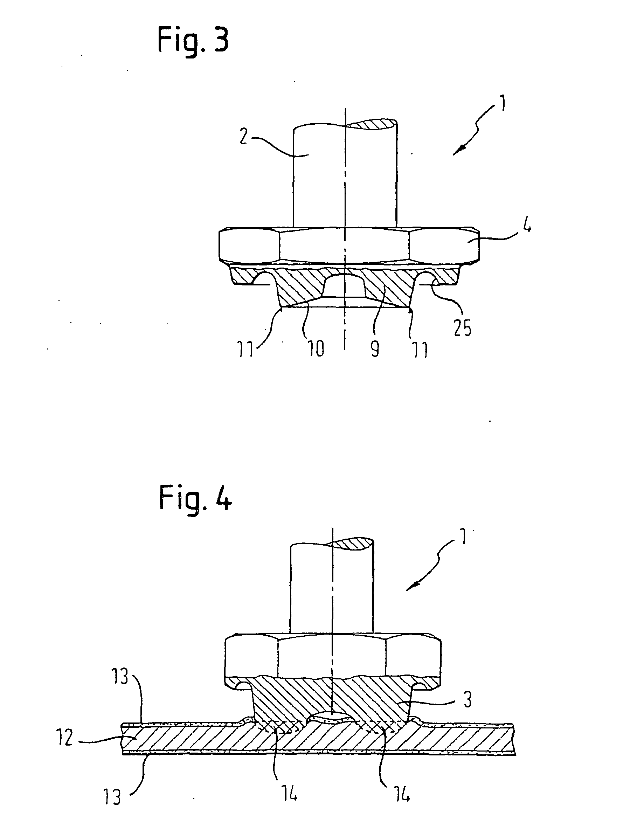

In der Figur 1 ist ein das Befestigungselement bildender Bolzen 1 dargestellt, der auf seiner einen Seite den glatten Schaft 2 und auf seiner anderen Seite den im Schnitt gezeichneten Ringwulst 3 als Bestandteil des Flansches 4 aufweist. Der Flansch 4 ist hinsichtlich seiner Außenfläche als Sechskant ausgebildet. Der Bolzen 1 wird zum Reibschweißen in ein entsprechend gestaltetes Futter einer bekannten Reibschweißvorrichtung eingespannt, für die der Sechskant des Flansches 4 als ein günstiger Mitnehmer zur Aufnahme der erforderlichen größeren Rotationskraft dient. Beim Reibschweißen wird von dem nicht dargestellten Futter auf die rückwärtige Fläche 5 des Flansches 4 gedrückt, womit dann der Ringwulst 3 gegen ein in der Figur 1 nicht dargestelltes flächiges Bauteil mit der erforderlichen Presskraft gedrückt wird. Ein solches flächiges Bauteil ist in Figur 4 dargestellt. Beim Andrücken des Bolzens 1 gegen ein Bauteil berührt der Ringwulst 3 mit dem Bereich seiner größten Höhe 6 (in Figur 2 strichpunktiert dargestellt). Dabei bildet sich eine sehr schmale konzentrische Berührungslinie aus, die dafür sorgt, dass sich beim Anpressen und bei der Rotation des Bolzens 1 automatisch eine Selbstzentrierung der Rotationsbewegung ergibt.

In der Figur 2 ist der Bolzen 1 in Draufsicht auf die Seite des Bolzens mit dem Ringwulst 3 dargestellt. In der Figur 2 ist, wie oben gesagt, die Berührungslinie 6 durch die dort strichpunktiert angegebene Linie 6 dargestellt.

Wie sich aus Figur 1 weiterhin ergibt, wird der Ringwulst 3 einerseits von der konzentrischen Rille 7 und andererseits von der zentralen Vertiefung 8 begrenzt. Dabei bildet die äußere Wandung 25 eine Fläche zur Abweisung von Abrieb unter Ausnutzung der Fliehkraft und die Vertiefung 8 einen Aufnahmeraum für den Abrieb (Schmelzereste und Schmutzpartikel), der dann den eigentlichen Reibschweißvorgang nicht mehr beeinträchtigen kann.

In der Figur 3 ist eine Abwandlung der Gestaltung eines Bolzens 1 gemäß Figur 1 dargestellt, bei der es sich um den Querschnitt des Ringwulstes handelt, der hier mit 9 bezeichnet ist. Der Ringwulst 9 besitzt nach innen hin die konvexe konisch umlaufende Konusfläche 10, die nach außen hin in der konzentrischen Berührungslinie 11 ausläuft. Diese weit außen am Ringwulst 9 angeordnete Berührungslinie 11 sorgt in besonderer Weise dafür, dass bei der Rotation des Bolzens 1 dieser sich selbst zentriert.

In der Figur 4 ist der Bolzen 1 gemäß Figur 1, angeschweißt an das flächige Bauteil 12, dargestellt. Das flächige Bauteil wird hier durch ein dünnes beschichtetes Blech gebildet, dessen Beschichtungen mit 13 bezeichnet sind. Wie ersichtlich, ist ein Teil des ballig ausgebildeten Ringwulstes 3 in das Material des Bauteils 12 eingedrungen und hat sich in dem Bereich 14 mit dem Material des Bauteils 12 porenfrei verschweißt.

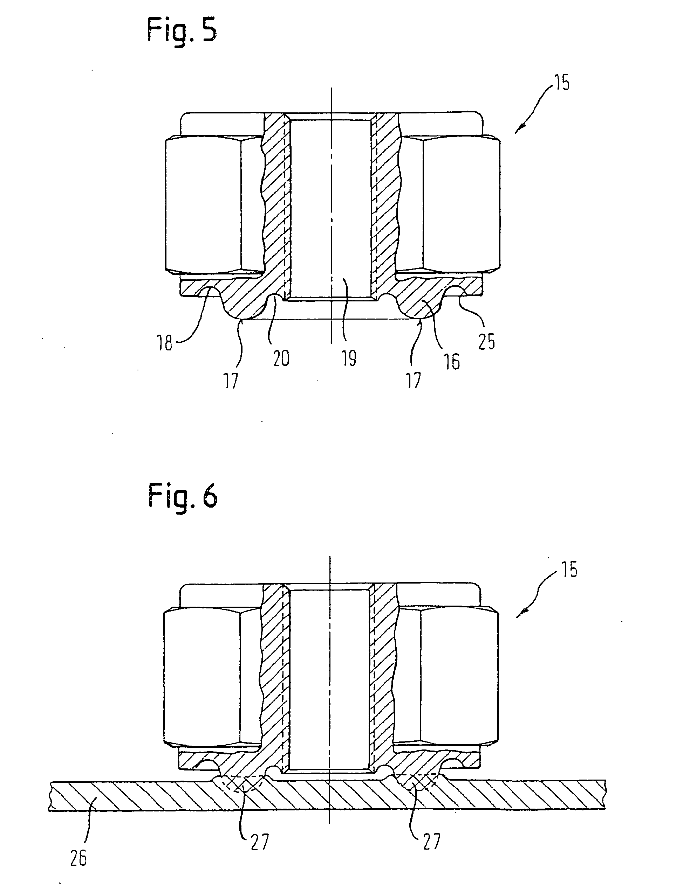

Figur 5 zeigt eine das Befestigungselement bildende Mutter 15, die auf ihrer einen Seite ähnlich der Gestaltung des Bolzens 1 gemäß Figur 1 ausgebildet ist. Auf der betreffenden Seite besitzt die Mutter 1 den Ringwulst 16 mit balliger Ausführung, an dem sich dann die Berührungslinie 17 beim Reibschweißen ausbildet. Neben dem Ringwulst 16 ist die Rille 18 vorgesehen. Zwischen dem Ringwulst 16 und dem Durchgangsloch 19 ist noch die innere Rille 20 vorgesehen, von der aus irgendwelcher Abrieb vom Durchgangsloch 19 weg abgeleitet werden.

In der Figur 6 ist die Mutter 15 gemäß Figur 5 dargestellt, und zwar angeschweißt an das flächige Bauteil 26, das hier durch ein dünnes Blech gebildet ist. Wie ersichtlich, ist ein Teil des ballig ausgebildeten Ringwulstes 16 in das Material des Bauteils 26 eingedrungen und hat sich in den Bereich 27 mit dem Material des Bauteils 26 verschweißt.

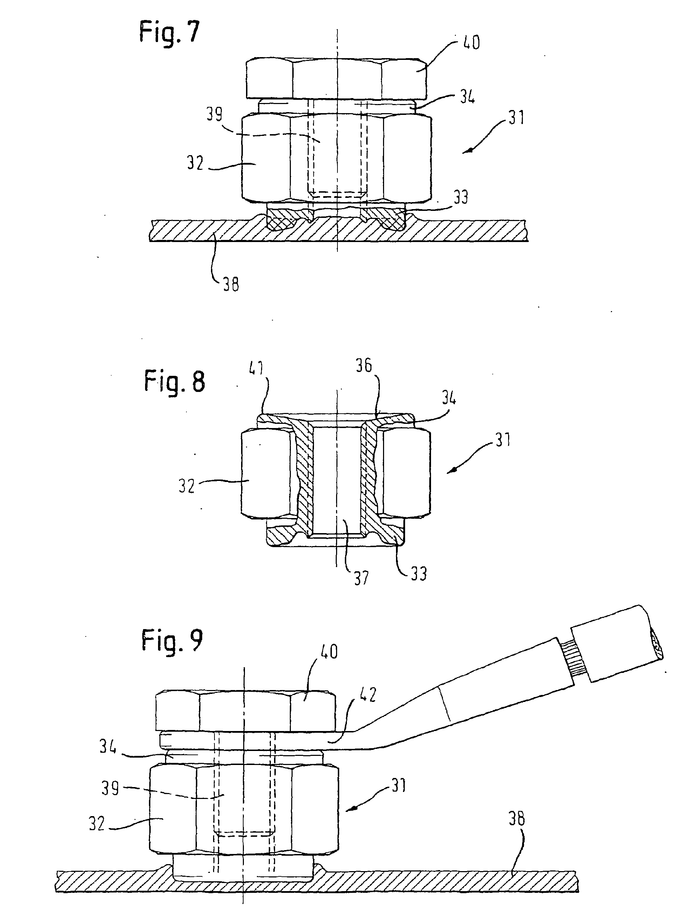

Figur 7 zeigt die Reibschweißmutter 31 (siehe auch Figur 8) verschweißt mit dem Blechteil 38. Beim Reibschweißvorgang wird in bekannter Weise die Reibschweißmutter 31 gegen das Blechteil 38 gedrückt, wobei sich der konzentrische Vorsprung 33 gegen die betreffende Oberfläche des Blechteils 38 drückt, durch Erhitzung verflüssigt wird und schließlich sich mit dem Blechteil 38 verschweißt.

Die Reibschweißmutter 31 ist mit der vormontierten Schraube 39 versehen, deren Schraubenkopf 40 gegen den aus Figur 8 ersichtlichen Außenrand 41 des Konus 36 drückt und an dieser Stelle wegen der schmalen, linienhaften Berührung eine besondere Abdichtung bildet, so dass ein bei angeschweißter Reibschweißmutter 31 gegebenenfalls anzubringender Überzug, z.B. eine Lackschicht, nicht in den Bereich des als Kontaktstelle dienenden Konus 36 dringen kann.

Die in der Figur 8 dargestellte Reibschweißmutter 31 weist den Mutterkörper 32 auf, dessen eine Seite als Schweißseite mit dem konzentrischen Ringwulst 33 versehen ist. Die andere Seite der Reibschweißmutter 31 bildet die Kontaktseite, die hierfür den konzentrischen Vorsprung 34 aufweist, der aus dem Mutterkörper 32 herausgeprägt ist. Der runde Außenrand des Vorsprungs 34 besitzt einen solchen Durchmesser, dass er von dem Kopf der vormontierten Schraube 39 überragt wird, was anhand der Figur 7 näher erläutert wird. Der Vorsprung 34 besitzt auf seiner Stirnseite den flachkonkaven Konus 36, der für eine besonders gute Kontaktgabe und Abdichtung bei einer angeschraubten elektrischen Leiter sorgt. Der Konus 36 bildet die Kontaktstelle für einen anzuschraubenden Leiter (siehe Figur 9). Die Reibschweißmutter 31 weist außerdem das Durchgangsloch 37 mit Innengewinde auf, weiterhin ist die Außenfläche des Mutterkörpers 32 als Sechskant ausgebildet, so dass die Reibschweißmutter 31 für den Reibschweißvorgang von einem entsprechenden Werkzeug sicher erfasst und gegen ein anzuschweißendes Bauteil angedrückt werden kann.

In der Figur 9 ist die Reibschweißmutter 31, verschweißt mit dem Blechteil 38, wie in Figur 1 dargestellt, gezeigt, wobei durch die in der Phase gemäß Figur 8 noch vormontierte Schraube 39 jetzt dazu dient, einen Kabelschuh 42 an der Reibschweißmutter 31 anzuschrauben, wobei der Kabelschuh 42 gegen den Konus 36 und dabei insbesondere gegen dessen Rand 41 gedrückt wird, womit sich ein besonders sicherer Kontakt und eine sichere Abdichtung ergeben, da sich bei diesem Andrücken das Material des Kabelschuhs 42 zumindest teilweise in den Konus 36 hineindrückt und sich damit in diesen gegen Verdrehung zusätzlich besonders sichert.

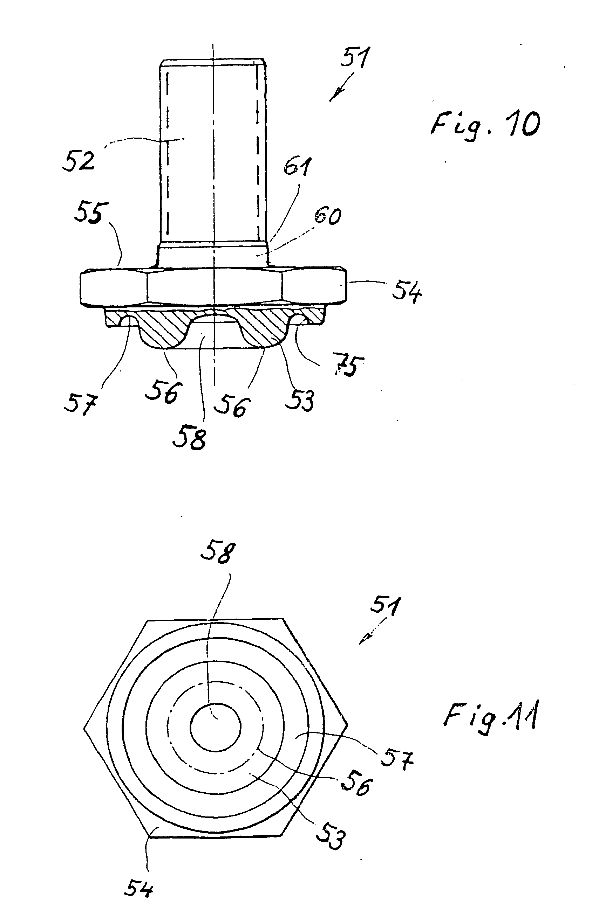

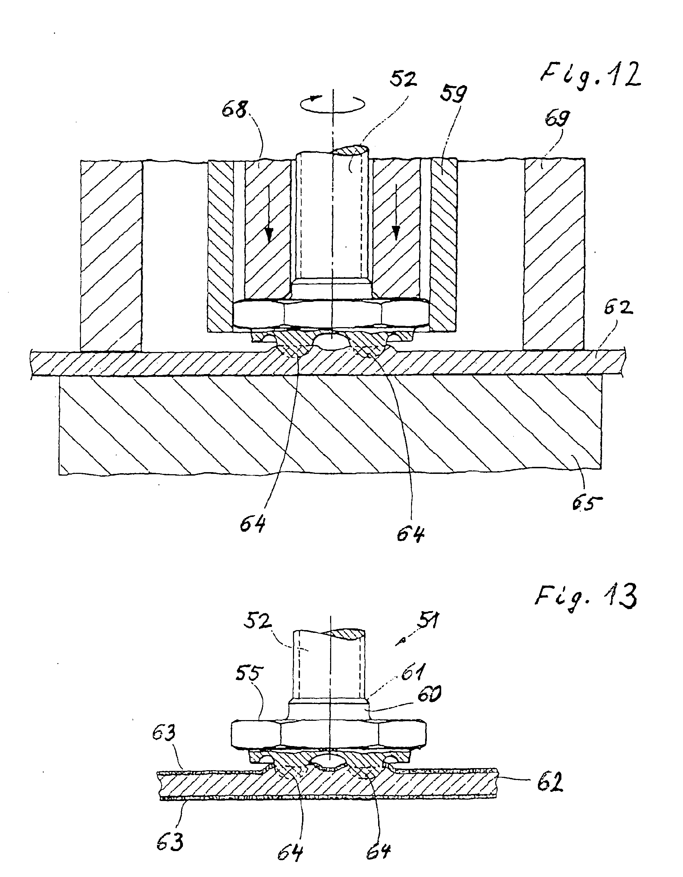

In der Figur 10 ist ein das Befestigungselement bildender Bolzen 51 dargestellt, der auf seiner einen Seite den Gewindeschaft 52 und auf seiner anderen Seite den im Schnitt gezeichneten Ringwulst 53 als Bestandteil des Flansches 54 aufweist. Der Flansch 54 ist hinsichtlich seiner Außenfläche als Sechskant ausgebildet. Der Bolzen 51 wird zum Reibschweißen in ein entsprechend gestaltetes Futter einer Reibschweißvorrichtung eingespannt (siehe Figur 12), für die der Sechskant des Flansches 54 als ein günstiger Mitnehmer zur Aufnahme der erforderlichen größeren Rotationskraft dient. Beim Reibschweißen wird von dem in Figur 10 nicht dargestellten Futter auf die rückwärtige Fläche 55 des Flansches 54 gedrückt, die als Gegenfläche 55 für die Presskraft dient, womit dann der Ringwulst 53 gegen ein in der Figur 10 nicht dargestelltes flächiges Bauteil mit der erforderlichen Presskraft gedrückt werden kann. Ein solches flächiges Bauteil ist in den Figuren 12 und 13 dargestellt. Beim Andrücken des Bolzens 51 gegen ein Bauteil berührt der Ringwulst 53 mit dem Bereich seiner größten Höhe 56 (in Figur 11 strichpunktiert dargestellt). Dabei bildet sich eine sehr schmale konzentrische Berührungslinie aus, die dafür sorgt, dass sich beim Anpressen und bei der Rotation des Bolzens 51 automatisch eine Selbstzentrierung der Rotationsbewegung ergibt.

Zwischen dem Gewindebereich des Gewindeschafts 52 und dem Flansch 54 ist der Hals 60 vorgesehen, der zylindrisch ausgebildet ist und koaxial zum Bolzen 51 verläuft, so dass der Hals 60 den idealen Führungsbereich zum Ansetzen eines Futters bietet, das damit bei genau zentrischer Drehung dem Bolzen eine schlagfreie Rotation aufzwingt. Der Hals 60 ist bei der dargestellten Gestaltung radial relativ nahe an der Berührungslinie im Bereich der Höhe 56 vorgesehen, so dass sich auch hierdurch eine günstige Führung des für das Reibschweißen erforderlichen Bereichs mit dem Ringwulst 53 bietet. Der Übergang vom Gewindeschaft 52 zum Hals 60 wird durch die konische Abschrägung 61 gebildet, die ein Aufsetzen eines Futters erleichtert.

In der Figur 11 ist der Bolzen 51 in Draufsicht auf die Seite des Bolzens mit dem Ringwulst 53 dargestellt. In der Figur 11 ist, wie oben gesagt, die Berührungslinie 56 durch die dort strichpunktiert angegebene Linie 56 dargestellt.

Wie sich aus Figur 10 weiterhin ergibt, wird der Ringwulst 53 einerseits von der konzentrischen Rille 57 und andererseits von der zentralen Vertiefung 58 begrenzt. Dabei bildet die äußere Wandung 75 eine Fläche zur Abweisung von Abrieb unter Ausnutzung der Fliehkraft und die Vertiefung 58 einen Aufnahmeraum für den Abrieb (Schmelzereste und Schmutzpartikel), der dann den eigentlichen Reibschweißvorgang nicht mehr beeinträchtigen kann.

In der Figur 12 ist der Bolzen 51, erfasst von einem Futter in der Phase der Rotation des Bolzens und Andrücken gegen das Bauteil 62 dargestellt, das in Figur 12 teilweise gezeigt ist und das Bauteil 62 durch den Niederhalter 69 gegen das Widerlager 65 drückt. Das Futter weist die Ringaufnahme 59 auf, die den mit einem Sechskantprofil ausgestalteten Flansch 54 satt umfasst und die von einem nicht dargestellten Drehantrieb beim Reibschweißen in Drehung versetzt wird. Dabei wird der Bolzen 51 in seinem Bereich mit dem zylindrischem Hals 60 von dem rohrartig gestalteten Druckstück 68 zentrisch erfasst, so dass bei der Drehung über den koaxialen, zylindrischen Hals 60 und das Druckstück 68 gewährleistet ist, dass der Ringwulst 53 des Bolzens ohne seitliches Ausweichen, also schlagfrei, rotiert. Auf Grund der Rotation und des Anpressens des Bolzens 51 mit seinem Ringwulst 53 tritt eine solche Erhitzung an der Berührungsstellen von Ringwulst 53 und Bauteil 62 ein, dass schließlich eine Reibschweißung in dem Bereich 64 mit dem Material des Bauteils 62 eintritt.

In der Figur 13 ist der Bolzen 51 gemäß Figur 10, angeschweißt an das flächige Bauteil 62 dargestellt. Das flächige Bauteil wird hier durch ein dünnes beschichtetes Blech gebildet, dessen Beschichtungen mit 63 bezeichnet sind. Wie ersichtlich ist ein Teil des ballig ausgebildeten Ringwulstes 53 in das Material des Bauteils 62 eingedrungen und hat sich in dem Bereich 64 mit dem Material des Bauteils 62 porenfrei verschweißt.

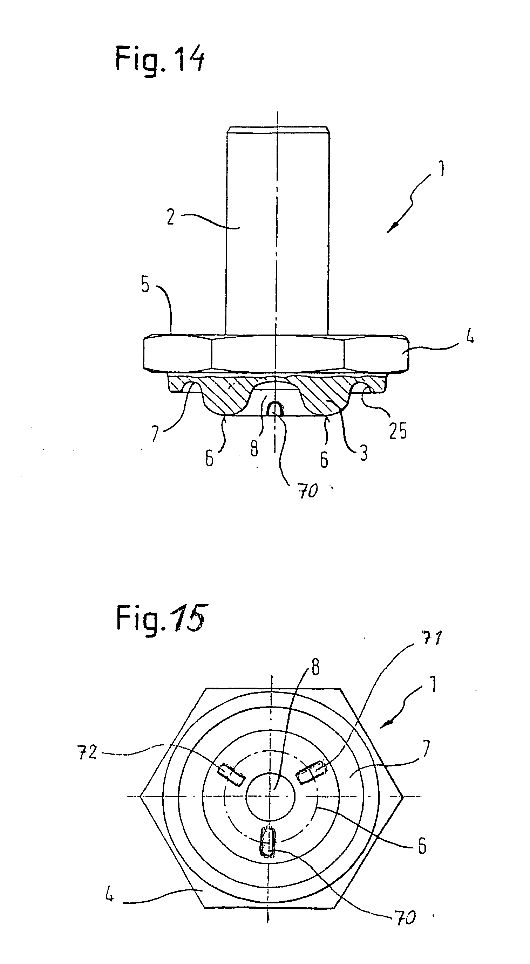

In der Figur 14 ist das in Figur 1 dargestellte Befestigungselement wiedergegeben, und zwar ergänzend mit der Radialnut 70, die im Bereich der größten Höhe 6 in den Ringwulst 3 eingelassen ist. Sie besitzt eine nur geringe Tiefe, die aber etwa hinsichtlich ihres Ausmaßes der Reibschweißverbindung entspricht, so dass bei Ausbildung der Reibschweißverbindung irgendwelche innerhalb des Ringswulstes 3 auftretende Gase durch die Nut 70 entweichen können. Aufgrund ihrer geringen Ausmaße beeinträchtigt die Radialnut 70 die Reibschweißverbindung nicht, sie unterstützt jedenfalls sogar den Reibschweißvorgang dadurch, dass durch ihre Kanten eventuelle Verschmutzungen oder Beschichtungen auf einem Bauteil weggeschabt werden.

In der Figur 15 ist das gleiche Befestigungselement in Draufsicht auf die Seite des Befestigungselementes mit dem Ringwulst 3 dargestellt. Wie ersichtlich, sind in den Ringwulst 3 drei Radialnuten 70, 71, 72 eingelassen. Es sei jedoch darauf hingewiesen, dass auch mehr oder weniger Radialnuten vorgesehen werden können, je nachdem, welche Materialien der zu erstellenden Reibschweißverbindung zugrunde liegen.

## Patentansprüche

1. Befestigungselement mit einer einen konzentrischen Ringwulst (3) aufweisenden Stirnseite zur Reibschweißverbindung mit einem flächigen Bauteil (12, 26) durch auf das Befestigungselement wirkende Rotationskraft und Presskraft gegen das Bauteil (12, 26), wobei der Ringwulst (3) im Bereich seiner größten Höhe (6) eine konzentrische Berührungslinie gegenüber dem Bauteil (12, 26) sowie eine zentrale Vertiefung (8) zur Aufnahme des Abriebs aufweist und Bestandteil eines Flansches (4) ist, der mit seiner dem Ringwulst (3) abgewandten Seite eine Gegenfläche (5) für die Presskraft gegen das Bauteil (12, 26) bildet, **dadurch gekennzeichnet dass** der Flansch (4) sowohl den Ringwulst (3) als auch außerhalb des Ringwulstes (3) eine konzentrische Rille (7) mit einer äußeren Wandung (25) zur Abweisung und Aufnahme von beim Reibschweißen entstehenden Abriebs aufweist, wobei der Flansch (4) mit seiner Außenfläche einen Mitnehmer für die Rotationskraft bildet.

2. Befestigungselement nach Anspruch 1, **dadurch gekennzeichnet, dass** der Ringwulst (3) im Querschnitt ballig ausgebildet ist.

3. Befestigungselement nach Anspruch 1, **dadurch gekennzeichnet, dass** der Ringwulst (9) im Querschnitt von einer konvexen, konzentrisch umlaufenden Konusfläche (10) begrenzt ist, die nach außen hin in der Berührungslinie am äußeren Rand (11) des Ringwulstes (9) endet.

4. Befestigungselement nach einem der Ansprüche 1 bis 3, **dadurch gekennzeichnet, dass** der Mitnehmer als Sechskant ausgebildet ist.

5. Befestigungselement nach einem der Ansprüche 1 bis 4, **gekennzeichnet durch** eine Ausbildung als Bolzen (1).

6. Befestigungselement nach einem der Ansprüche 1 bis 4, **gekennzeichnet durch** eine Ausbildung als Mutter (15).

7. Befestigungselement nach Anspruch 6, **gekennzeichnet durch** seine Ausbildung als Massekontakt, dessen eine Seite als Schweißseite den konzentrischen Ringwulst (33) für den Reibschweißvorgang und dessen andere Seite als Kontaktseite für die elektrische Kontaktierung eines elektrischen Leiters derart gestaltet ist, dass die Kontaktseite einen gegenüber dem Mutterkörper (32) konzentrischen Vorsprung (34) aufweist, dessen Stirnseite die Kontaktfläche bildet und dessen runder Außenrand vom Kopf (40) einer vormontierten Schraube (39) überragt und abgedichtet ist.

8. Befestigungselement nach Anspruch 7, **dadurch gekennzeichnet, dass** der Durchmesser des Außenrandes des Vorsprungs (34) kleiner ist als der kleinste Durchmesser der Unterseite des Kopfes (40) der Schraube (39).

9. Befestigungselement nach Anspruch 7 oder 8, **dadurch gekennzeichnet, dass** die Stirnseite des Vorsprungs (34) als flachkonkaver Konus (36) gestaltet ist, dessen runder Außenrand (41) bei Andrücken des Schraubenkopfes (40) einen linienhaften Kontaktbereich erhöhten Kontaktdrucks und Abdichtung bildet.

10. Befestigungselement nach Anspruch 5, **dadurch gekennzeichnet, dass** der Bolzen (51) einen Gewindeschaft (52) aufweist, der über einen an den Flansch (54) anschließenden koaxialen, zylindrischen Hals (60) mit gegenüber dem Gewindeschaft (52) größeren Durchmesser in die Gegenfläche (55) übergeht.

11. Befestigungselement nach einem der Ansprüche 1 bis 10, **dadurch gekennzeichnet, dass** der Ringwulst (3) im Bereich seiner größten Höhe (6) mindestens eine Radialnut 70, 71, 72 aufweist, deren Tiefe mindestens der Reibschweißverbindung entspricht.

## Claims

1. Fastening element having a face, which has a concentric annular bead (3), for being friction welded to a two-dimensional component (12, 26) by a rotational force acting upon the fastening element and a pressing force directed toward the component (12, 26), wherein the annular bead (3) has, in the area of its greatest height (6), a concentric line of contact with the component (12, 26) as well as a central recess (8) for accomodating the pressure and being part of a flange (4), which forms an opposite surface (5) for the pressing force against the component (12, 26) with its side facing away from the annular bead (3), **characterized in that** the flange (4) comprises the annular bead (3) as well as a concentric groove (7) outside of the annular bead (3) having an outer ball (25) for repelling and receiving rubbed-off parts arising during friction welding, wherein the flange (4) forms a driver for the rotational force with its outer surface.

2. Fastening element according to claim 1, **characterized in that** the annual bead (3) is formed in its section in a convex shape.

3. Fastening element according to claim 1, **characterized in that** the annual bead (9) is bordered in its cross section by a convex, concentrically extending cone shaped surface (10) which ends to the outside in the line of contact at its outer edge (11) of the annual bead (9).

4. Fastening element according to one of the claims 1 to 3, **characterized in that** the driver is formed as a hexagon.

5. Fastening element according to one of the claims 1 to 4, **characterized by** being formed as a bolt (1).

6. Fastening element according to one of the claims 1 to 4, **characterized by** being formed as a nut (15).

7. Fastening element according to claim 6, **characterized by** being formed as a ground contact one side of which forms, as welding side, the concentric annual bead (33) for the friction welding process, and the other side of which is formed, as a contact side for the electrical contacting of an electrical conductor, such that, the conductor side comprises a protrusion (34) concentric with respect to the body (32) of the nut, where the face of which protrusion forms the contact surface and the round outer edge of the head (40) is seeded by a pre-mounted screw (39) and sealed thereby.

8. Fastening element according to claim 7, **characterized in that** the diameter of the outer edge of the protrusion (34) is smaller than the smallest diameter of the bottom side of the head (40) of the screw (39).

9. Fastening element according to claim 7 or 8, **characterized in that** the face of the protrusion (34) is formed as a flat concave cone (36) the round outer edge (41) of which forms a line shaped contact area of enlarged contact pressure and a sealing effect upon pressing the head (40) of the screw thereto.

10. Fastening element according to claim 5, **characterized in that** the bolt (51) comprises a threaded shaft (52) which merges into the counter surface (55) via a coaxial, cylindrical neck (60) following the flange (54) and having a larger diameter than the thread shaft (52).

11. Fastening element according to one of the claims 1 to 10, **characterized in that** the annual bead (3) comprises, in the area of the highest height (6), at least one radial groove (70, 71, 72) the depth of which correspondences at least to the friction weld connection.

## Revendications

1. Elément de fixation avec une face présentant un bourrelet annulaire (3) concentrique en vue d'une liaison par soudage à friction avec un élément constitutif plat (12, 26) par force de rotation et de pression à action sur l'élément de fixation contre l'élément constitutif (12, 26), sachant que le bourrelet annulaire (3) présente dans la zone de sa plus grande hauteur (6) une ligne de contact concentrique en face de l'élément constitutif (12, 26) et un creux (8) central en vue de l'admission de l'abrasion et est le composant d'une bride (4), qui forme avec son côté opposé au bourrelet annulaire (3) une surface antagoniste (5) pour la force de pression contre l'élément constitutif (12, 26), **caractérisé en ce que** la bride (4) présente aussi bien le bourrelet annulaire (3) qu'à l'extérieur du bourrelet annulaire (3) une rainure concentrique (7) avec une paroi extérieure (25) en vue du rejet et admission de l'abrasion provoquée lors du soudage par friction, sachant que la bride (4) avec sa surface extérieure forme un entraîneur pour la force de rotation.

2. Elément de fixation selon revendication 1, **caractérisée en ce que** le bourrelet annulaire (3) est formé dans la section transversale de manière bombée.

3. Elément de fixation selon revendication 1 **caractérisé en ce que** le bourrelet annulaire (9) est limité par une surface conique (10) convexe, concentrique périphérique, qui aboutit vers l'extérieur sur la ligne de contact du bord extérieur (11) du bourrelet annulaire (9).

4. Elément de fixation selon l'une des revendications 1 à 3, **caractérisé en ce que** l'entraîneur est formé en tant que qu'élément hexagonal.

5. Elément de fixation selon l'une des revendications 1 à 4, **caractérisé par** une formation en tant que boulon (1).

6. Elément de fixation selon l'un des revendication 1 à 4 **caractérisé par** une formation en tant qu'écrou. (15).

7. Elément de fixation selon revendication 6, **caractérisé par** sa formation en tant que contact de masse, dont un côté forme le bourrelet annulaire (33) en tant que côté de soudage pour le processus de soudage par friction et dont l'autre côté est formé en tant que côté de contact pour la connexion électrique d'un conducteur électrique, de telle manière que le côté de contact présente une saillie (34) concentrique face au corps d'écrou (32) dont la face forme la surface de contact et dont le bord extérieur rond de la tête (40) d'une vis pré montée (39) dépasse et est étanche.

8. Elément de fixation selon revendication 7, **caractérisé en ce que** le diamètre du bord extérieur de la saillie (34) est plus petit que le plus petit diamètre du côté inférieur de la tête (40) de la vis (39).

9. Elément de fixation selon revendication 7 ou 8, **caractérisé en ce que** la face de la saillie (34) est formé en tant que cône à concavité plane (36) dont le bord extérieur rond (41) forme, en serrant la tête de vis (40), une zone de contact linéaire de pression de contact élevée et étanchéité.

10. Elément de fixation selon revendication 5, **caractérisé en ce que** le boulon (51 ) présente une tige filetée (52), qui passe par un col coaxial, cylindrique (60) raccordé à la bride (54) avec un diamètre plus grand face à la tige filetée, dans la surface antagoniste (55).

11. Elément de fixation selon l'une des revendications 1 à 10, **caractérisé en ce que** le bourrelet annulaire (3) dans la zone de sa plus grande hauteur(6) présente au moins une rainure radiale 70,71,72 dont la profondeur correspond au moins à la liaison de soudage par friction.
